# EUROPÄISCHE PATENTSCHRIFT

(11) **EP 3 071 435 B1**
(45) Veröffentlichungstag und Bekanntmachung des Hinweises auf die Patenterteilung: **30.01.2019**
(21) Anmeldenummer: 14801986.2
(22) Anmeldetag: 13.11.2014
(51) Int. Cl.: B60H 1/34, F24F 13/14

(54) **LAMELLE UND LUFTAUSSTRÖMER MIT MINDESTENS EINER LAMELLE**
LOUVER AND AIR VENT HAVING AT LEAST ONE LOUVER
LAMELLE ET AÉRATEUR MUNI D'AU MOINS UNE LAMELLE

(30) Priorität: 21.11.2013 DE 102013112850; 26.02.2014 DE 102014102533
(43) Veröffentlichungstag der Anmeldung: 28.09.2016
(73) Patentinhaber: Dr. Schneider Kunststoffwerke GmbH, 96317 Kronach (DE)
(72) Erfinder: UHLENBUSCH, Olaf, 96275 Marktzeuln (DE); SCHNEIDER, Michael, 96264 Altenkunstadt (DE); MATRANE, Kamal, 44143 Dortmund (DE)
(86) Internationale Anmeldenummer: PCT/EP2014/074530
(87) Internationale Veröffentlichungsnummer: WO 2015/074955

(56) Entgegenhaltungen:
- EP-A1- 2 505 397
- DE-A1- 19 948 218
- DE-A1-102004 043 923
- DE-A1-102004 062 935
- DE-A1-102007 061 576
- DE-U1-202012 101 945
- FR-A1- 2 912 085
- GB-A- 1 322 480
- JP-A- H0 413 041
- JP-A- S5 871 211
- JP-U- H0 298 011

## Beschreibung

Die vorliegende Erfindung betrifft eine Lamelle und einen Luftausströmer mit mindestens einer Lamelle. Der Patentanspruch 1 erfasst die Merkmale der Lamelle, der Patentanspruch 5 gibt die Merkmale des Luftausströmers wieder.

Unter Lamelle versteht die vorliegende Erfindung Teile in einem Kraftfahrzeug, beispielsweise in einem Personen-Kraftfahrzeug oder einem Last-Kraftfahrzeug, die eine größere Längserstreckung als Breitenerstreckung aufweisen. Solche Teile finden in vielfacher Hinsicht Verwendung. Erfindungsgemäß weisen Lamellen in einer Lamellenanordnung in einem Gehäuse eines Luftausströmers derartige Strukturen auf. Es kann sich hierbei um vertikal und/oder um horizontal angeordnete Lamellen handeln bzw. um Lamellen in drehbaren Düsen, die jede Schräglage einnehmen können.

Wenn eine Lamelle in einer Luftaustrittsöffnung eines Luftausströmers, die üblicherweise aus Kunststoff gefertigt ist, eine größere Länge bzw. bei vertikaler Anordnung eine größere Höhe aufweist, erfolgt bei deren Betätigung eine erhöhte mechanische Belastung der Lamelle, was zum Durchbiegen derselben führen kann.

Es hat sich ferner gezeigt, dass auch bei mechanisch relativ unbelasteten Lamellen solche Verbiegungen, insbesondere bei längerem Gebrauch und bei höheren thermischen Belastungen eintreten können, insbesondere dann, wenn die Lamellen sehr dünn ausgeführt sind.

Luftausströmer zum Einsatz in Kraftfahrzeugen sind hinlänglich bekannt. Derartige Luftausströmer weisen zumeist separate und um einen Winkel gegeneinander versetzt angeordnete Lamellenblöcke auf, mittels welcher der Luftstrom, der in den Luftausströmer eingeleitet und mittels des Luftausströmers gesteuert wird, in seiner Orientierung gerichtet werden soll.

Aus DE 20 2006 004 052 U1 ist eine Lamelle für eine horizontale und/oder vertikale Lamellenanordnung in einem Gehäuse einer Luftdüse mit einer vorderen Luftaustrittsöffnung und einem Anschluss an einen Luftführungsschacht offenbart. Mindestens eine Lamelle ist als Dreh- oder Schiebeelement ausgebildet. Die mindestens eine Lamelle ist mit einem Einstellelement oder Anzeigeelement verbunden und besteht aus Kunststoff, wobei in Längsrichtung ein versteifendes metallisches Einlegeteil eingesetzt ist.

Um eine Lamelle, die mit einem Einstellelement versehen oder als Steuerlamelle ausgebildet ist, derart zu versteifen, dass sie den mechanischen Ansprüchen entspricht und ein Durchbiegen vermieden wird, ist in der DE 20 2006 004 052 U1 vorgeschlagen, die Lamelle als Verbundteil auszuführen und in Längserstreckung ein versteifendes metallisches Einlegeteil einzulegen, das sich im Wesentlichen über die gesamte Länge der Lamelle erstreckt und größtenteils oder vollständig mit dem Kunststoff umgeben ist.

Aus der DE 20 2004 008 181 U1 ist ein aus Kunststoff bestehendes Lamellengitter einer vorzugsweise in ein Kraftfahrzeug einbaubaren Luftdüse mit einer Vielzahl verschwenkbarer Lamellen bekannt. Auf mindestens einer Lamelle ist ein längsverschiebbarer Reiter angeordnet, der mit zumindest einer quer zu den Lamellen im Lüftungsgehäuse verschwenkbar angeordneten Richtungslamelle verbunden ist.

Aus US 2005/0012433 A1 ist ein piezoelektrischer Antrieb in Form eines Rotors, bestehend aus Polymeren mit langer Lebensdauer offenbart. Zur Herstellung dieses Rotors werden in das Polymer Fasern aus Kohlenstoff, Metall, Fieberglas integriert.

Aus DE 195 10 637 C1 ist eine Absperreinrichtung für eine Lüftungsöffnung, insbesondere für eine Klimaanlage, mit einem Rahmen und einem zum Verschließen und Freigeben der Lüftungsöffnung im Rahmen angeordneten Absperrorgan offenbart. Die Absperreinrichtung ist so ausgebildet, dass das Absperrorgan von mehreren Lamellen gebildet wird, wobei die nebeneinander angeordneten Lamellen an ihren zur Schwenkachse parallelen Randseiten gelenkig miteinander verbunden sind.

Aus EP 1 342 601 A1 ist ein Windabweiser für eine Dachöffnung eines Kraftfahrzeugs offenbart. Dieser besteht aus unterschiedlichen Kunststoffkomponenten, welche einen Körper ausbilden. Dieser Körper besteht aus einem die Formbeständigkeit und Festigkeit sichernden Grundkörper und angespritzten Weichkunststoffelementen.

Aus DE 102 25 811 B4 ist eine Luftdüse mit einem verstellbaren Lamellengitter offenbart. Die Düse weist ein Gehäuse und eine den sichtbaren Endbereich umschließende Abdeckblende auf. Das Lamellengitter besteht aus mehreren parallel im Abstand zueinander angeordneten Lamellen und mindestens einem quer zur Längserstreckung verlaufenden Lamellenkamm, durch den die mittels angeformter, gegenüber dem Gehäuse ortsfest gehaltener Drehzapfen schwenkbar gelagerten und gemeinsam mit mindestens einem Lamellenkamm in dem Fertigungsgang durch Kunststoffspritzgießen hergestellten Lamellen miteinander verbunden sind. Das Lamellengitter ist komplett als Baueinheit gestaltet und kann in das Gehäuse eingesetzt werden.

Aus DE 10 2004 046 059 ist eine Luftdüse mit Lamellen mit mindestens einem über einen Antrieb bedienbaren Stellelement zur Regelung des Luftstroms, insbesondere für ein Belüftungssystem eines Kraftfahrzeugs, bekannt. Das Stellelement weist eine Vielzahl von Lamellen auf. Über einen Antrieb des Stellelements ist mindestens ein weiteres Stellelement betätigbar.

Aus DE 10 2004 062 935 A1 ist ein Luftausströmer für den Innenraum eines Fahrzeugs bekannt. Der Luftausströmer weist einen an der Luftaustrittsseite eines Luftströmungskanals in einem Gehäuse angeordneten Lamellenblock auf, der im Wesentlichen aus parallelen und im Abstand zueinander angeordneten, schwenkbaren und Strömungsschlitze bildende Lamellen besteht. Von den Lamellen besitzt mindestens eine einen wenigstens teilweise sperrenden Verschlussschenkel für einen dieser Strömungsschlitze. Mittels einer solchen Lamelle kann ein Luftausströmer in der Weise gestaltet werden, dass eine Richtungsbeeinträchtigung des Luftstromes durch die Gehäusewandung bei durch den Lamellenblock abgelenkter Luftströmung, sowie eine optische und akustische Beeinträchtigung ausbleiben, letztere zumindest erheblich reduziert wird. Dazu ist der Verschlussschenkel an einer Randlamelle des Lamellenblockes, zu einem Wandungsbereich des Gehäuses weisend, angeordnet, und der Wandungsbereich weist einen Öffnungsschlitz oder eine Ausnehmung für diesen auf.

Aus DE 199 48 218 A1 ist ein Absperrelement in einem Strömungskanal mit einem beweglichen verwindungsarm ausgebildeten und/oder gelagerten Schließteil und einem Anlagebereich für das Schließteil, bekannt. das Schließteil ist zwischen einer an dem Anlagebereich dicht anliegenden Verschlusssteilung und einer von dem Anlagebereich abgehobenen maximalen Offenstellung des Schließteiles verstellbar. Es ist zumindest einer der bei der Verschlusssteilung aneinander liegenden Bereiche des Schließteils oder des Anlagebereiches elastisch ausgebildet und in Schließsteilung elastisch verformt. In einem definiert vorgegebenen schließstellungsnahen Stellbereich des Schließteils liegt ein ausschließlich von Bereichen des Schließteils und des Anlagebereiches umrandeter Kanalöffnungsbereich vor. Die absolute Flächenveränderung des durchströmbaren Kanalöffnungsbereiches ist innerhalb des schließstellungsnahen Stellbereiches des Schließteils durch elastische Verformung des verschlussbildenden, elastischen Bereiches des Schließteils und/oder des Anlagebereiches bei gleichen Verstellwegen des Schließteils geringer als außerhalb dieses Stellbereiches.

Nachteilig bei dem bekannten Stand der Technik ist, dass die bekannten Luftausströmer, bedingt durch die Lamellenblöcke, die in der Frontseite eingelassen sind, eine gewisse Dimensionierung und Größe aufweisen.

Der vorliegenden Erfindung liegt die Aufgabe zu Grunde, eine Lamelle aufzuzeigen, die eine besonders gute Führung eines Luftstromes in einem Gehäuse ermöglicht. Ein weiterer Aspekt der Erfindung ist es, einen Luftausströmer mit einer entsprechenden Lamelle aufzuzeigen.

Diese Aufgabe wird anhand der Merkmale des Patentanspruches 1 und der Merkmale des Patentanspruches 5 gelöst.

Vorteilhafte Ausgestaltungen der Erfindung sind in den Unteransprüchen, der weiteren Beschreibung und insbesondere anhand der Beschreibung anhand konkreter Ausführungsbeispiele anhand von Figuren dargestellt.

Die erfindungsgemäße Lamelle, die insbesondere eine längs gestreckte Form besitzt, besteht aus einem nahezu die gesamte Längsrichtung einnehmenden Frontbereich und einem Rückbereich, wobei der Frontbereich und der Rückbereich aus in ihren mechanischen Eigenschaften unterschiedlichen Werkstoffen, vorzugsweise Kunststoffen und insbesondere thermoplastischen Kunststoffen, bestehen. Der Werkstoff des Frontbereichs weist vorzugsweise in Längsrichtung eine relativ hohe Biegesteifigkeit auf, wohingegen der für den Rückbereich der Lamelle eingesetzte Werkstoff eine gegenüber dem Frontbereich erheblich geringere Biegesteifigkeit aufweist. Der Rückbereich der Lamelle ist in Querrichtung länger als der Frontbereich ausgebildet. Die Auswahl der mechanischen Eigenschaften der Werkstoffe für den Frontbereich und den Rückbereich ermöglichen es, eine Lamelle herzustellen, die formstabil und mechanisch belastbar ist und zugleich eine gute Luftleiteigenschaft aufweist. Mit dem Frontbereich kann die Lamelle in eine Anordnung oder an eine Anordnung, wie z.B. einen Lamellenblock oder eine Jalousieaufnahme, angeordnet oder integriert werden. Der Frontbereich ist mechanisch belastbar und biegesteif. Somit kann die Lamelle relativ lang und dünn gegenüber einer herkömmlichen Lamelle ausgestaltet sein. Durch den Werkstoff für den Rückbereich, der eine geringere Biegesteifigkeit aufweist und z.B. ein so genannter weicher Kunststoff sein kann, können für eine Lamelle gewünschte weitere mechanische Eigenschaften erfüllt werden, so z.B., dass sich der Rückbereich an einen angrenzenden Gegenstand oder Fläche oder Flächenbereich quasi anschmiegt. Außerdem wird, bedingt durch die Schwerkraft und das Eigengewicht der Lamelle, insbesondere der Rückbereich der Lamelle, bei ebener Anordnung der Lamelle in einer Horizontalen, leicht nach unten gebogen.

In einer vorteilhaften Ausgestaltung der Erfindung nach Patentanspruch 2, ist vorgesehen, dass der Rückbereich der Lamelle in Querrichtung mindestens doppelt so lang ist wie der Frontbereich der Lamelle. Der Frontbereich und der Rückbereich der Lamelle gehen formschlüssig ineinander über. Es sind keine für das Auge eines Benutzers erkennbare Übergänge vorhanden. Der Übergang zwischen dem Frontbereich der Lamelle und dem Rückbereich der Lamelle ist konturlos ausgestaltet. Durch eine längere Ausgestaltung des Rückbereichs wird die Möglichkeit einer Verbiegung der Lamelle im Bereich des Rückbereichs ermöglicht. Die Lamelle weist eine flache, wellige und/oder eckige Querschnittsstruktur auf.

In einer vorteilhaften Ausgestaltung der Erfindung nach Patentanspruch 3 ist vorgesehen, dass der Frontbereich und der Rückbereich der Lamelle aus thermoplatischem Kunststoff bestehen und der Frontbereich ein Elastizitätsmodul von mindestens 12.000 MPa und der Rückbereich ein Elastizitätsmodul von maximal 5.000 MPa aufweisen und dass die Lamelle in einem Zwei-Komponenten-Spritzgussverfahren hergestellt ist und dass dem thermoplastischen Kunststoff des Frontbereichs Fasern aus Kohlenstoff, Metall, Glasfasern oder Kunststoff mit aufgerauter Oberfläche oder Metallfadenabschnitte zugesetzt sind. Durch die Wahl der Fasern ist zum Einen das Elastizitätsmodul beeinflussbar, zum Andern sind die Materialwahl und/oder die dadurch bedingte Oberflächenstruktur der Fasern von Bedeutung und somit, in welcher Weise sich die Fasern in die Molekülstruktur des Kunststoffes einbinden, wodurch die Materialeigenschaft eines mit dem Gemisch aus Kunststoff und beigemischten Fasern hergestellten Gegenstandes beeinflussbar ist. Durch ein Zwei-Komponenten-Spritzgussverfahren ist die Lamelle in einem einheitlichen Fertigungsvorgang herstellbar. Die Wahl eines hohen Elastizitätsmoduls für den Frontbereich gewährt eine gute Stabilität und Steifigkeit der Lamelle, durch die Wahl eines geringen Elastitizätsmoduls für den Rückbereich werden die gewünschten Eigenschaften der Lamelle in Bezug auf einen mechanischen Kontakt zu angrenzenden und/oder berührenden Flächen oder Elementen ermöglicht. Alternativ kann die Lamelle mittels Hybridtechnik hergestellt sein, d.h. der Frontbereich der Lamelle könnte aus Metall, wie etwa Zinkdruckguss, Aludruckguss, Stahl oder Aluminium bestehen und der Rückbereich der Lamelle aus einem thermoplastischen Kunststoff, welcher An- bzw. umspritzt oder auch montiert werden kann.
Alternativ zu einem weichen Thermoplast für den weichen Rückbereich der Lamelle kann auch eine dünne Folie bzw. mehrere dünne Folien übereinander geschichtet zum Einsatz kommen. Vorteilhaft bei dieser Variante wäre das geringe Biegemodul.

In einer vorteilhaften Ausgestaltung der Erfindung nach Patentanspruch 4 ist vorgesehen, dass der Rückbereich der Lamelle aufgrund der geringeren Biegesteifigkeit ohne Bruch der Lamelle in Querrichtung verbiegbar ist und sich an angrenzende Berührungsflächen anschmiegt und mit Berührungsflächen einen nahezu formschlüssigen Abschluss oder eine Abdichtung vornimmt. Es werden somit die gewünschten Eigenschaften der Lamelle in Bezug auf einen mechanischen Kontakt zu angrenzenden und/oder berührenden Flächen oder Elementen erreicht.

In Patentanspruch 5 ist ein Luftausströmer mit einer erfindungsgemäßen Lamelle gemäß den vorhergehenden Patentansprüchen benannt. Der Luftausströmer besteht aus einem Gehäuse, das eine vordere Luftaustrittsöffnung und einen hinteren Anschluss an einen Luftzuführschacht zur Zuführung eines Luftstroms aufweist. Die mindestens eine Lamelle ist im vorderen Bereich des Gehäuses an einer Stützeinheit derart angeordnet, dass der Luftstrom mittels der mindestens einen Lamelle ablenkbar ist, wobei die Lage der mindestens einen Lamelle im Gehäuse mittels der Stützeinheit in horizontaler Richtung innerhalb des Gehäuses veränderbar ist und/oder die Lamelle an der Stützeinheit um eine horizontal verlaufende Achse drehbar gelagert ist oder die mindestens eine Lamelle feststehend im Gehäuse an der Stützeinheit angeordnet ist. Durch die mindestens eine Lamelle ist der durch das Gehäuse des Luftausströmers geführte Luftstrom in seiner Orientierung beim Austritt aus der Luftaustrittsöffnung beeinflussbar und/oder ablenkbar. Durch weitere Maßnahmen ist der Luftstrom in seiner Orientierung zusätzlich beeinflussbar.

In einer vorteilhaften Ausgestaltung der Erfindung nach Patentanspruch 6 ist vorgesehen, dass die Stützeinheit eine Strebe oder eine Walze ist, wobei die Walze drehbar im Bereich der Luftaustrittsöffnung des Gehäuses gelagert ist und die Strebe im Bereich der Luftaustrittsöffnung des Gehäuses angeordnet sind.

In einer vorteilhaften Ausgestaltung der Erfindung nach Patentanspruch 7 ist vorgesehen, dass die Gehäuseinnenwand des Gehäuses im Bereich der Luftaustrittsöffnung eine Cassinische Kurve in Form einer Lemniskate ausbildet oder eine Kreisbogenform ausbildet, deren Radius in Richtung der Luftaustrittsöffnung sich verkleinert und im Bereich der Berührungsfläche zwischen dem Rückbereich der mindestens einen Lamelle und der Gehäuseinnenwand des Gehäuses eine Einschnürung ausbildet.

In einer vorteilhaften Ausgestaltung der Erfindung nach Patentanspruch 8 ist vorgesehen, dass vor oder in der Luftaustrittsöffnung, formschlüssig diese verschließend, ein Gitter anordenbar ist.

In einer vorteilhaften Ausgestaltung der Erfindung nach Patentanspruch 9 ist vorgesehen, dass das Gitter durch horizontal und vertikal angeordnete Stege und zwischen den Stegen sich ausbildenden Ausnehmungen gebildet ist, wobei die Ausnehmungen in unterschiedlichen Richtungswinkeln eingebracht sind, wobei die Richtungswinkel der Ausnehmungen, die in einem horizontalen mittigen Bereich in der Luftaustrittsöffnung angeordnet sind, senkrecht zu den Stegen verlaufen und die Richtungswinkel der Ausnehmungen oberhalb dieses Bereiches einen nach oben geneigten Winkel und die Ausnehmungen unterhalb dieses Bereiches einen nach unten geneigten Winkel aufweisen, wobei dieser Winkel in einer vorteilhaften Ausgestaltung der Erfindung zwischen 30° und 45° liegt. Durch das Gitter und die spezielle Ausgestaltung des Gitters können Vorzugsrichtungen für den durch das Gitter strömenden Luftstrom eingestellt werden. In der Mitte ist die Vorzugsrichtung horizontal, im oberen Bereich wird der Luftstrom durch die Aussparungen im Gitter nach oben abgelenkt, im unteren Bereich nach unten. Das Gitter kann aus Kunststoff bestehen und einteilig bzw. mehrteilig ausgebildet sein, sofern es aufgrund seiner Dicke und der daraus resultierenden Hinterschnitte nicht mehr entformbar sein sollte. Das Gitter kann auch aus einem tiefgezogenen Metall bestehen, wobei die Durchbrüche gestanzt wären. Die Vorzugsrichtungen können entweder in vertikaler oder in horizontaler Ebene eingebracht sein. Das Gitter kann auch in "4 Richtungen" (horizontal und vertikal) Vorzugsrichtungen aufweisen, beispielsweise, wenn ein diffuser (aufgeweiteter, breiter) Luftstrom erwünscht ist.

In einer vorteilhaften Ausgestaltung der Erfindung nach Patentanspruch 10 ist vorgesehen, dass das Gitter in Form eines Rollos, bestehend aus flexiblem Material, vor die Luftaustrittsöffnung schiebbar oder in Form eines Visiers vor die Luftaustrittsöffnung klappbar ist, wobei das Gitter in das Gehäuse einklappbar oder einschiebbar ist. Dadurch kann ein Benutzer das Gitter im Bedarfsfall in eine Anwendungsposition verbringen oder aber die Luftaustrittsöffnung ohne Gitter verwenden. Das Gitter ist im Gehäuse des Luftausströmers oder oberhalb oder unterhalb oder seitlich hiervon einschiebbar.

In einer vorteilhaften Ausgestaltung der Erfindung nach Patentanspruch 11 ist vorgesehen, dass im Gehäuse eine Anordnung zur Führung und/oder Ablenkung und/oder Unterbindung des zugeführten Luftstroms angeordnet ist, der aus einem Luftzufuhrschacht oder aus einer Luftzufuhrleitung in Heizungs-, Lüftungs- oder Klimaanlagen, insbesondere für Fahrgasträume in Kraftfahrzeugen, zuführbar ist, und dass das Gehäuse in einen Wanddurchbruch einsetzbar oder hinter einem solchen montierbar ist und dass die Anordnung mindestens aus zwei separaten und um einen Winkel gegeneinander versetzt und/oder hintereinander angeordneten Elementen gebildet ist, so dass der zugeführte Luftstrom in seiner Strömungsrichtung einstellbar oder ablenkbar oder nahezu vollständig unterbindbar ist, wobei die Elemente mindestens jeweils eine Lamelle oder mindestens ein Lamellenblock sind, wobei ein Lamellenblock mehrere miteinander gekoppelte Lamellen aufweist und wobei eine jede der miteinander gekoppelten Lamellen eines Lamellenblocks im Lamellenblock derart gelagert ist, dass die Lamellen eines Lamellenblocks gemeinsam um eine Achse verschwenkbar sind.

In einer vorteilhaften Ausgestaltung der Erfindung nach Patentanspruch 12 ist vorgesehen, dass im Gehäuse eine Engstelle eingebracht ist, wobei die Engstelle mittels eines Trichters gebildet ist. Durch diese Engstelle wird unter Ausnutzung des Venturi-Effektes der Luftstrom beschleunigt und kann von der mindestens einen Lamelle besser gerichtet werden.

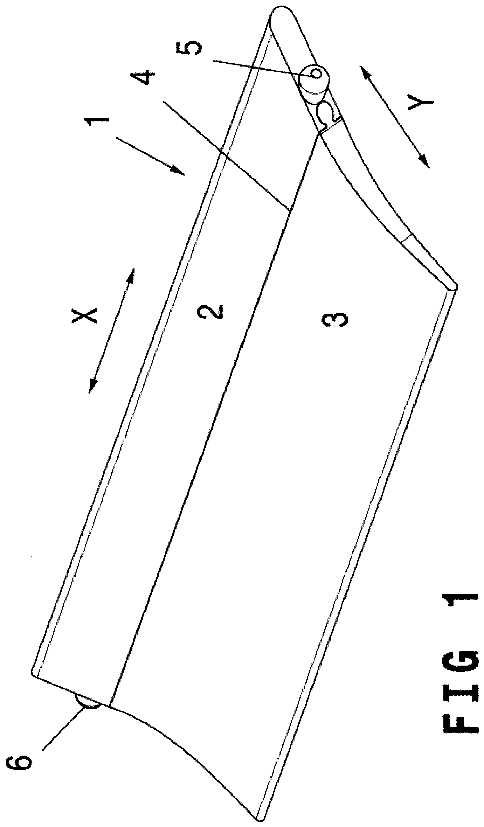

Nachfolgend wird die Erfindung anhand konkreter Ausführungsbeispiele anhand der beigefügten Figuren FIG 1 bis FIG 11 dargestellt.

Diese Beschreibung anhand der konkreten Ausführungsbeispiele stellt keine Limitierung der Erfindung auf eines dieser konkreten Ausführungsbeispiele dar.

Es werden in den Figuren und in der Figurenbeschreibung gleichen Elementen gleiche Bezugszeichen zugewiesen. Dies dient der besseren Übersichtlichkeit und Verständlichkeit der folgenden Beschreibung.

Es zeigen:
- FIG 1: eine Lamelle in perspektivischer Darstellung;
- FIG 2: einen Längsschnitt durch einen Luftausströmer;
- FIG 3: eine Detailansicht von FIG 2, dort mit B bezeichnet;
- FIG 4: einen Luftausströmer in Frontansicht;
- FIG 5: einen Längsschnitt durch einen Luftausströmer gem. FIG 4;
- FIG 6: einen Luftausströmer in Frontansicht;
- FIG 7: einen Längsschnitt durch einen Luftausströmer gem. FIG 6;
- FIG 8: einen Längsschnitt durch einen Luftausströmer;
- FIG 9: einen Längsschnitt durch einen Luftausströmer gem. FIG 8;
- FIG 10: eine Ausgestaltung des Gitters als Rollo; und
- FIG 11: eine Anordnung des Gitters als Klappvisier.

In FIG 1 ist eine Ausführungsform einer erfindungemäßen Lamelle 1 dargestellt. Die Lamelle 1 besteht aus Kunststoff und ist in ihrer Ausgestaltung gemäß FIG 1 zum Einsatz und/oder Einbau in einen Luftausströmer in Fahrzeugen, vorzugsweise Kraftfahrzeugen, vorgesehen. Die Lamelle 1 ist mit An- und Ausformungen 5, 6 zum Verbinden mit anderen Bauelementen oder zur Lagerung an oder zur Befestigung von Bauelementen ausgestattet. Die Lamelle 1 besteht im Wesentlichen aus zwei Bereichen, dem Frontbereich 2 und dem Rückbereich 3. Der Frontbereich 2 besteht aus thermoplastischem Kunststoff, dem Zusatzstoffe zugefügt sind. In einer vorteilhaften Ausgestaltung der Erfindung besteht der Frontbereich 2 aus mit kurzen Fasern versetztem Polyamid oder Polyarylamid, wobei die Fasern Kohlenstofffasern, Metallfadenabschnitte oder Fasern aus Kunststoff mit aufgerauter Oberfläche, Glasfasern oder Metallfäden sind.

Die Lamelle 1 weist eine Querschnittsstruktur auf, die vorzugsweise flach ausgebildet ist, aber auch wellig oder auch eckig ausgebildet sein kann. Ebenso kann in gestreckter Richtung die Lamelle 1 ebene,
wellige oder auch verteilt eckige Strukturen aufweisen; von der ebenen Form abweichende Strukturen sind einsatzbedingt und tragen zu einer Versteifung bei.

Die Lamelle 1 ist in der Ausführung gemäß FIG 1 dazu vorgesehen, in einer Lamellenanordnung mit weiteren Lamellen oder als einzelne Lamelle in einem Gehäuse eines Luftausströmers mit einer vorderen Luftaustrittsöffnung und einem hinteren Anschluss an einen Luftzuführschacht als gestrecktes Teil fest verbaubar oder verschwenkbar gelagert angeordnet zu werden.

Die Lamelle 1 weist an den oberen und unteren Stirnflächen seitlich vorstehende Ausformungen 5, 6 in Form von Lagerzapfen auf. Die Lagerzapfen können aus dem Kunststoff der Lamelle 1 ausgeformte oder aus einem Einlegeteil, das mit dem Kunststoff der Lamelle 1 umspritzt ist, ausgearbeitete Ansätze sein. Das Einlegeteil kann Ansätze aufweisen, die sich in die aus Kunststoff bestehenden Lagerzapfen erstrecken.

Um den Luftstrom beim Austritt aus dem Luftausströmer zu verwirbeln oder besser abzuleiten, ist in weiterer vorteilhafter Ausgestaltung der Lamelle 1 vorgesehen, dass im vorderen Bereich die Lamelle 1 eine über mindestens eine Teillänge wulstförmige Verdickung aufweist.

Als Kunststoffmaterial für den Frontbereich 2 der Lamelle 1 kann Polyamid (PA) oder Polyarylamid (PAA), das mit Fasern versetzt ist, verwendet werden, so dass damit nicht nur wirtschaftlich Lamellen mit hoher Biegesteifigkeit herstellbar sind, wobei diese eine gewünschte hohe Steifigkeit bei geringer Höhenausbildung bzw. Dicke aufweisen.

Dieses Kunststoffmaterial eignet sich in vorteilhafter Weise für die Herstellung von Lamellen für Luftdüsen, gleich welcher Art und Ausprägung, sowie für Jalousielamellen, zur Herstellung von Jalousien verschiedenster Breite und Größe, die auch hohe Stabilität und Steifigkeit aufweisen. Im Falle der verwendeten Fasern mit aufgerauter Oberfläche kann das Polyamid oder Polyarylamid in die Poren eindringen und stützt den Verbund.

Wird der Frontbereich 2 der Lamelle 1 aus diesem Material hergestellt, so kann dieser Bereich auch partiell metallisiert werden, so dass hierüber auch stromleitungsführende Bahnen realisiert werden können. Ebenso ist eine komplette Metallisierung möglich, z. B. ein Verchromen. Der Einsatz dieses Materials hat darüber hinaus gezeigt, dass die Formstabilität so hoch ist, dass auch nach Stress- oder Langzeittests eine Durchbiegung nicht gegeben ist, insbesondere auch dann nicht, wenn durch direkte Sonneneinstrahlung Temperaturen im Bereich von über 100° C erreicht werden. Dies ist auf die eingebundenen Füllstoffe, wie z.B. das Fasermaterial, zurückzuführen.

Beim thermoplastischen Kunststoff für den Frontbereich 2 der Lamelle 1 wie auch für den Rückbereich 3 handelt es sich vorzugsweise um lineare und/oder teilweise aromatische Polyamide sowie deren Gemische. Polyamide sind Polymere mit sich regelmäßig wiederholenden Amidbindungen entlang der Hauptkette. Die Amidgruppe kann als Kondensationsprodukt einer Carbonsäure und eines Amins aufgefasst werden. Die dabei entstehende Bindung ist eine Amidbindung, die hydrolytisch wieder spaltbar ist.

Polyamide werden wegen ihrer hervorragenden Festigkeit und Zähigkeit oft als Konstruktionswerkzeuge verwendet. Gute chemische Beständigkeit besteht gegenüber organischen Lösungsmitteln. Es besteht aber dennoch die Möglichkeit, dass Polyamide von Säuren oder oxidierenden Chemikalien angegriffen werden. Um die Eigenschaften des Kunststoffes weiter in Richtung der gewünschten Stabilität und Biegesteifigkeit zu beeinflussen, sind den Polyamiden Fasern und/oder weitere Bestandteile zugemischt.

In der Kunststofftechnik ist ein wichtiges Kennzeichenmerkmal für die mechanische Eigenschaft eines Kunststoffes das so genannte Elastizitätsmodul oder auch kurz E-Modul, das auch als Youngsches Modul - benannt nach dem Physiker Thomas Young - bezeichnet wird. Das Elastizitätsmodul ist ein Materialkennwert aus der Werkstofftechnik, der den Zusammenhang zwischen Spannung und Dehnung bei der Verformung eines festen Körpers bei linear-elastischem Verhalten beschreibt. Der Wert des Elastizitätsmoduls ist umso größer, je mehr Widerstand ein Material seiner Verformung entgegensetzt. Ein Material mit hohem Elastizitätsmodul ist steif. Ein Material mit niedrigem Elastizitätsmodul ist nachgiebig. Das Elastizitätsmodul ist die Proportionalitätskonstante im Hookschen Gesetz. Bei kristallinen Materialien ist das Elastizitätsmodul grundsätzlich richtungsabhängig. Sobald ein Werkstoff eine kristallografische Textur hat, ist das Elastizitätsmodul anisotrop.

Der Frontbereich 2 der Lamelle 1 ist in der Weise gewählt, dass durch Beimischung von Fasern und/oder Zusatzstoffen zum Kunststoff die Lamelle 1 im Frontbereich 2 ein Elastizitätsmodul bzw. E-Modul von mindestens 12.000 MPa aufweist. Dies wird durch die Beimischung der Zusatzstoffe erreicht.

Der Rückbereich 3 der Lamelle 1 ist in der Weise gewählt, dass der Rückbereich 3 der Lamelle 1 ein Elastizitätsmodul bzw. E-Modul von maximal 5.000 MPa aufweist.

Die Lamelle 1 mit dem Frontbereich 2 und dem Rückbereich 3 kann mittels des bekannten Zwei-Komponenten-Spritzgussverfahrens hergestellt werden. Der eingangs beschriebene thermoplastische Kunststoff kann ohne Einschränkung verarbeitet werden.

Die Lamelle 1 weist eine längs gestreckte Form auf, die in Längsrichtung x wesentlich größer als in Querrichtung y ist. Der Frontbereich 2 erstreckt sich über die gesamte Längsrichtung x der Lamelle 1. An den Frontbereich 2 ist der Rückbereich 3 angegliedert, der in einem 2K-Spritzgussverfahren an den Frontbereich 2 angespritzt wird. Der Frontbereich 2 weist, wie bereits ausgeführt, andere mechanische Eigenschaften, insbesondere eine höhere Biegebelastung, als der Rückbereich 3 auf. Der Rückbereich 3 ist in seiner Eigenschaft bzgl. mechanischer Belastungen auf Flexibilität ausgerichtet, so dass sich insbesondere der hintere Bereich des Rückbereichs 3 an eine angrenzende Ebene oder Fläche anschmiegt und diese sogar teilweise abdichtet. Der Rückbereich 3 weist gegenüber dem Frontbereich 2 eine erheblich geringere Biegesteifigkeit auf. Der Rückbereich 3 ist in Querrichtung y gegenüber dem Frontbereich 2 deutlich länger ausgestaltet.

In einer vorteilhaften Ausgestaltung der Erfindung läuft der Rückbereich 3 zum Ende der Lamelle 1 sich verjüngend in Querrichtung y aus. Damit erhält die Lamelle 1 eine Art Flugzeugtragflächenform.

In einer vorteilhaften Ausgestaltung der Erfindung hat sich gezeigt, dass die Lamelle 1 besonders dann ihre Funktion gut erfüllt, wenn der Rückbereich 3 der Lamelle in Querrichtung y mindestens doppelt so lang gewählt ist wie der Frontbereich 2 der Lamelle 1.

Der Frontbereich 2 und der Rückbereich 3 der Lamelle 1 gehen formschlüssig ineinander über und bilden im Übergangsbereich 4 keinerlei Konturen aus, so dass die Lamelle 1, optisch betrachtet, eine Einheit darstellt. Der Übergangsbereich 4 zwischen dem Frontbereich 2 und dem Rückbereich 3 ist konturlos. Der Übergangsbereich 4 weist jedoch eine Eigenschaft auf, nämlich dass die Lamelle 1 in Querrichtung y, ausgehend vom Übergangsbereich 4, verbiegbar ist.

Durch die im Frontbereich 2 vorhandenen Fasern und/oder Füllstoffe bildet sich zwischen dem Frontbereich 2 und dem Rückbereich 3 der Lamelle 1 ein mechanisch besonders stark belastbarer Übergangsbereich 4 aus. Der Frontbereich 2 und der Rückbereich 3 gehen eine stabile Verbindung ein.

Ein Lamellenblock besteht aus mindestens zwei parallel zueinander im Lamellenblock angeordneten Lamellen 1, die über eine im oder am Lamellenblock vorhandene Vorrichtung gemeinsam um eine Achse, die vorzugsweise durch die Lagerzapfen der Lamelle 1 verläuft, schwenkbar gelagert sind.

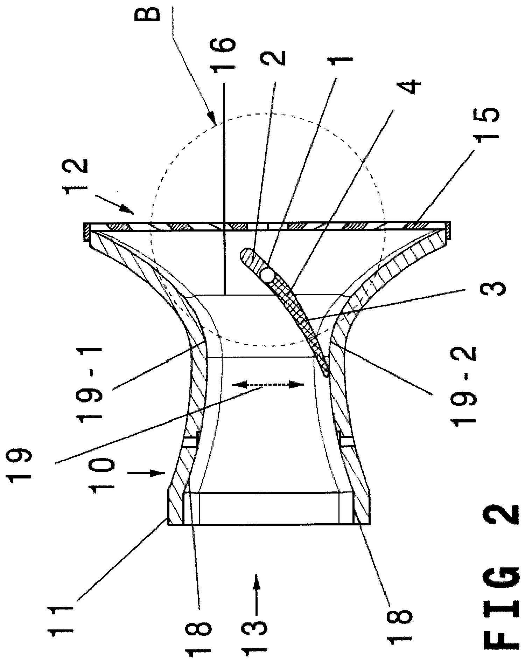

In FIG 2 ist ein Schnitt durch einen Luftausströmer 10, in dem eine erfindungsgemäße Lamelle 1 angeordnet ist, dargestellt. Der Luftausströmer 10 besteht aus einem Gehäuse 11, das eine vordere Luftaustrittsöffnung 12 und einen hinteren Anschluss 13 aufweist, der dazu dient, an einen Luftzuführungsschacht zur Zuführung eines Luftstroms angeschlossen zu werden. Der Luftausströmer 10 ist dazu vorgesehen, in eine Heizungs-/Lüftungs- oder Klimaanlage, insbesondere für Fahrgasträume in Fahrzeugen, eingesetzt zu werden, wobei das Gehäuse 11 in einen Wanddurchbruch einsetzbar oder hinter einem solchen montierbar ist.

Die Lamelle 1 ist im Gehäuse 11 des Luftausströmers 10 angeordnet. Die Front der Lamelle 1 mit dem Frontbereich 2 befindet sich in etwa horizontal mittig angeordnet im Bereich der Luftaustrittsöffnung 12; die Lamelle 1 ist mit dem Frontbereich 2 leicht in das Gehäuse 11 rückversetzt. Im Gehäuse 11 ist eine Stützeinheit 16 vorgesehen, die die Lamelle 1 im Übergangsbereich 4 der Lamelle 1 lagernd aufnimmt. Es können aber auch die Lagerzapfen an der Lamelle 1, die in FIG 2 nicht dargestellt sind, verwendet werden, um die Lamelle 1 an der Stützeinheit 16 drehbar zu lagern. Die Lamelle 1 ist an der Stützeinheit 16 derart gelagert, dass die Lamelle 1 aus einer unteren maximalen Auslenkposition, wie in FIG 2 dargestellt, in eine obere maximale Auslenkposition verstellbar ist. Diese Verstellung kann mechanisch von einem Benutzer über eine entsprechende, in FIG 2 nicht dargestellte Betätigungsvorrichtung erfolgen oder aber über eine in FIG 2 ebenfalls nicht dargestellte elektrisch betriebene Stelleinheit. Die Lamelle 1 kann in jede Position zwischen der unteren maximalen Auslenkposition, wie in FIG 2 dargestellt, und der oberen maximalen Auslenkposition verbracht werden.

Die Stützeinheit 16 ist in einer vorteilhaften Ausgestaltung der Erfindung ein von oben nach unten innerhalb des Gehäuses 11 verlaufendes Strebenpaar. In einer weiteren vorteilhaften Ausgestaltung der Erfindung ist anstelle des Strebenpaars eine Walze, die drehbar im Bereich der Luftaustrittsöffnung 12 im Gehäuse 11 gelagert ist, angeordnet.

Mittels der Lamelle 1 und deren Front- und Rückbereich 2, 3 wird der Luftstrom, der über den hinteren Anschluss 13 dem Luftausströmer 10 zugeführt wird, in seiner Orientierung beim Austritt aus der Luftaustrittsöffnung 12 beeinflusst und abgelenkt.

In der in FIG 2 dargestellten unteren maximalen Auslenkposition schmiegt sich der flexibel ausgestaltete Rückbereich 3 der Lamelle 1 an die untere Innenseite 18 des Gehäuses 11 an und dichtet quasi die untere Innenseite 18 des Gehäuses 11 ab, so dass der Luftstrom zwingend über die Lamelle 1 abgelenkt wird und nicht unter dieser, zumindest partiell, hindurchströmen kann. In der oberen maximalen Auslenkposition schmiegt sich der flexibel ausgestaltete Rückbereich 3 der Lamelle 1 an die obere Innenseite 18 des Gehäuses 11 an und dichtet quasi die obere Innenseite 18 des Gehäuses 11 ab, so dass der Luftstrom zwingend über die Lamelle 1 abgelenkt wird und nicht oberhalb dieser, zumindest partiell, hindurchströmen kann.

Durch den Einsatz einer erfindungsgemäßen Lamelle 1 in einem Luftausströmer 10 wird damit eine definierte Richtung des Luftstromes erreicht.

In die Luftaustrittsöffnung 12 des Gehäuses 11 des Luftausströmers 10 ist ein Gitter 15 einbringbar oder dort fest angeordnet.

Die Gehäuseinnenwände 18 sind im Bereich des hinteren Anschlusses 13 gerade verlaufend, im Bereich der Luftaustrittsöffnung 12 ist die Form der Gehäuseinnenwände 18, jeweils im oberen und unteren Bereich in Richtung der Luftaustrittsöffnung 12 in Form einer Cassinischen Kurve in Form einer Lemniskate 19-1, 19-2 ausgebildet oder aber die Gehäuseinnenwände 18 sind jeweils im oberen und unteren Bereich in Richtung der Luftaustrittsöffnung 12 in Form eines Kreisbogens ausgebildet, dessen Radius sich in Richtung der Luftaustrittsöffnung 12 verkleinert und im Bereich der Berührungsflächen zwischen dem Rückbereich 3 der Lamelle 1 und der Gehäuseinnenwand 18 eine Einschnürung 19 ausbildet.

Eine Cassinische Kurve ist die Menge aller Punkte, deren Entfernung von zwei festen Punkten ein konstantes Produkt bilden.

Insbesondere die Ausgestaltung der Innenwände 18 im Bereich der Luftaustrittsöffnung 12 in Form einer Lemniskate gewährt eine besonders vorteilhafte Luftströmung aus der Luftaustrittsöffnung 12 des Luftausströmers 10, da der Luftstrom aufgrund der Einschnürung 19 beschleunigt wird. Unter Ausnutzung des Venturi-Effektes wird der Luftstrom beschleunigt und lässt sich durch die Lamelle 1 besonders gut richten.

In einer vorteilhaften Ausgestaltung der Erfindung ist die Lamelle 1 im Gehäuse 11 so angeordnet, dass der Rückbereich 3 der Lamelle 1 in Richtung des hinteren Anschlusses 13 die Einschnürung 19 gering übersteht.

Durch die Einschnürung 19 und die besondere Ausgestaltung der Innenwände 19-1, 19-2 legt sich die Strömung an den Innenwänden 19-1, 19-2 an. Hierbei wird der Coanda-Effekt ausgenutzt. Somit kann die Ablenkung des Luftstromes, trotz der Ausrichtung der Lamelle 1 mit nur 30° Neigung gegen die Luftstromrichtung, eine Ablenkung von 50° ermöglichen, mit einem vorgesetzten Gitter 15 immerhin noch mindestens 32°. Bei einer Lamellenstellung von 45° kann der Luftstrom um bis zu 53° abgelenkt werden, mit vorgesetztem Gitter 15 ist eine Ablenkung von bis zu 38° möglich.

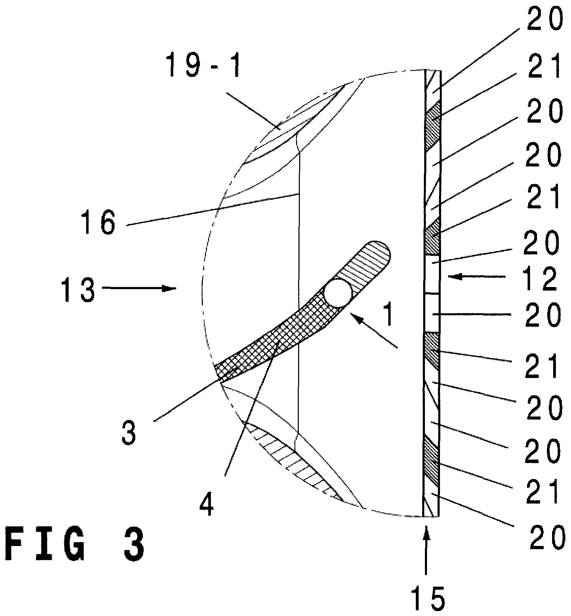

In FIG 3 ist ein vergrößerter Ausschnitt aus FIG 2, in FIG 2 mit B bezeichnet, dargestellt. Es ist die obere Innenwand 19-1 noch teilweise dargestellt.

Es ist ein Teilausschnitt der Lamelle 1 mit ihrem Frontbereich 2 und dem Rückbereich 3 dargestellt. Im Weiteren ist der Übergangsbereich 4, an dem vorzugsweise die Lagerung der Lamelle 1 drehbar an der Stützeinheit 16 vorgesehen ist, dargestellt.

Vor bzw. in der Luftaustrittsöffnung 12 des Luftausströmers 10 ist eine Blende in Form des Gitters 15 dargestellt. Das Gitter 15 weist Streben 21 und Aussparungen 20 auf, wobei die Aussparungen 20 vorzugsweise in Form von Bohrungen ausgebildet sind. Die Aussparungen 20 weisen gleiche Orientierung auf. Im Mittenbereich des Gitters 15, in horizontaler Ebene, sind die Aussparungen 20 senkrecht in das Gitter 15 eingebracht. Oberhalb und unterhalb dieses Bereiches weichen die Aussparungen 20 in ihrem Einbringungswinkel ab, jeweils in Richtung der Ober- und Unterseite des Gehäuses 11, so dass die Aussparungen 20 im unteren Bereich in einem spitzen Winkel von 30° geneigt zur Unterseite des Gehäuses 11 und im oberen Bereich in einem spitzen Winkel von 30° geneigt zur Oberseite des Gehäuses 11 verlaufen.

Durch diese Gestaltung der Aussparungen 20 des Gitters 15 kann der aus der Luftaustrittsöffnung 12 austretende Luftstrom zusätzlich beeinflusst werden, insbesondere in Richtung einer diffusen Luftverteilung.

In einer weiteren vorteilhaften Ausgestaltung der Erfindung ist vorgesehen, dass das Gitter 15 in Segmente, z.B. Kreissegmente oder Kreisringe, unterteilt ist und die Winkel der Aussparungen 20 in den Segmenten unterschiedlich gewählt sind.

In einer weiteren vorteilhaften Ausgestaltung der Erfindung, insbesondere bei rechteckigen Luftausströmern, hat es sich als vorteilhaft erwiesen, in der Mitte des Gitters 15 einen Bereich anzuordnen, in dem die Aussparungen 20 horizontal verlaufend über die gesamte Breite des Gitters 15 eingebracht sind und in darüber und darunter liegenden Segmenten des Gitters 15 die Winkel der Aussparungen zu erhöhen, z.B. jeweils steigend um 10° bzw. minus 10° zu verändern. Sind z.B. drei Segmente oberhalb und unterhalb des Mittenbereichs vorhanden so sind die Aussparungen 20 im ersten Segment mit 10°, im zweiten Segment mit 20° und im dritten Segment mit 30° eingebracht.

Das Gitter 15 weist in einer vorteilhaften Ausgestaltung der Erfindung eine Dicke von mindestens 2,5 mm auf.

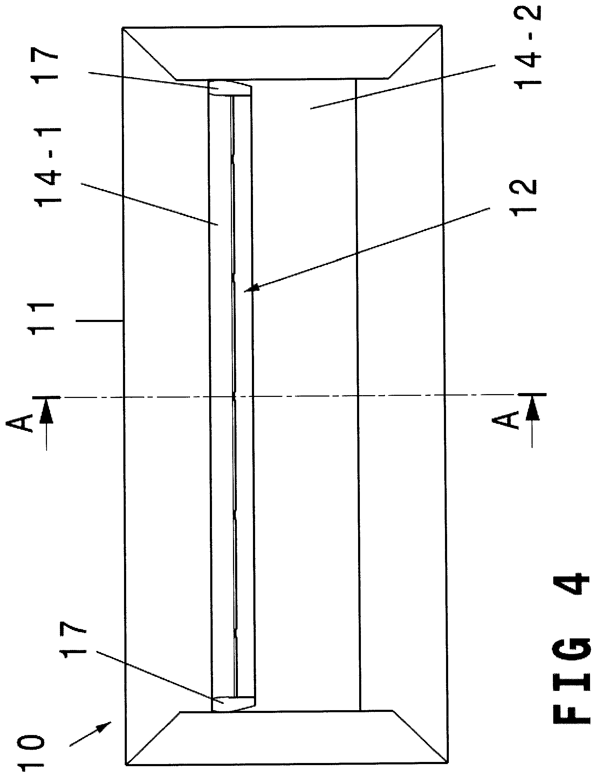

In FIG 4 ist ein Luftausströmer 10 in Frontansicht dargestellt. Der Luftausströmer 10 weist wiederum einen hinteren Anschluss 13 zur Zuführung eines Luftstroms auf. Im vorderen Bereich ist eine Luftaustrittsöffnung 12 vorhanden. Die Innenwand 18 des Gehäuses 11 des Luftausströmers 10 verläuft im Bereich des hinteren Anschlusses 13 gerade. Es ist eine Einschnürung 19 vorgesehen, die den Innendurchmesser des Gehäuses 11 reduziert.

Im Bereich der Luftaustrittsöffnung 12 ist drehbar eine Walze 17, etwas nach hinten versetzt, angeordnet. Die Walze 17 ist so ausgestaltet, dass sie in dem Bereich, der innerhalb des Gehäuses 11 zu Liegen kommt, keine Mantelfläche aufweist, sondern entsprechend Aussparungen vorhanden sind, so dass die Walze 17 den Luftstrom nicht beeinflusst. An der Walze 17 ist im oberen und unteren Bereich jeweils eine Lamelle 14-1 und 14-2 angeordnet. Die Lamellen 14-1, 14-2 können an der Walze 17 drehbar, d.h. verstellbar gelagert sein, in einer anderen Ausgestaltung sind die Lamellen 14-1, 14-2 fest an der Walze 17 angeordnet. Durch ein Drehen der Walze 17 kann die Orientierung des Luftstromes über die Lamellen 14-1, 14-2 verändert werden.

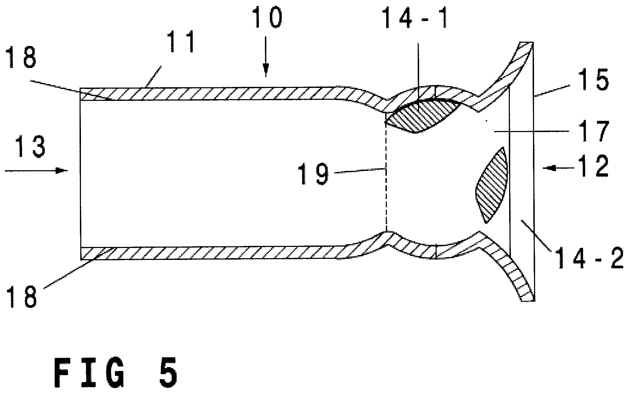

In FIG 5 ist ein Schnitt durch den Luftausströmer gemäß FIG 4 dargestellt; der Schnittverlauf ist in FIG 4 mit A-A gekennzeichnet.

Es ist die Einschnürung 19 im Gehäuseinnern dargestellt. Die Walze 17 ist im Gehäuse 11 in der Luftaustrittsöffnung 12 leicht rückversetzt angeordnet. In FIG 5 ist die maximale Ausrichtung der Lamellen 14-1, 14-2 dargestellt, um den Luftstrom nach oben abzulenken.

Die Walze 17 weist vorzugsweise eine Linsenform auf, d.h. die Walze 17 ist in ihrem, den Luftstrom beeinflussenden Bereich linsenförmig ausgestaltet. Dies ist auch strömungsbedingt besonders vorteilhaft.

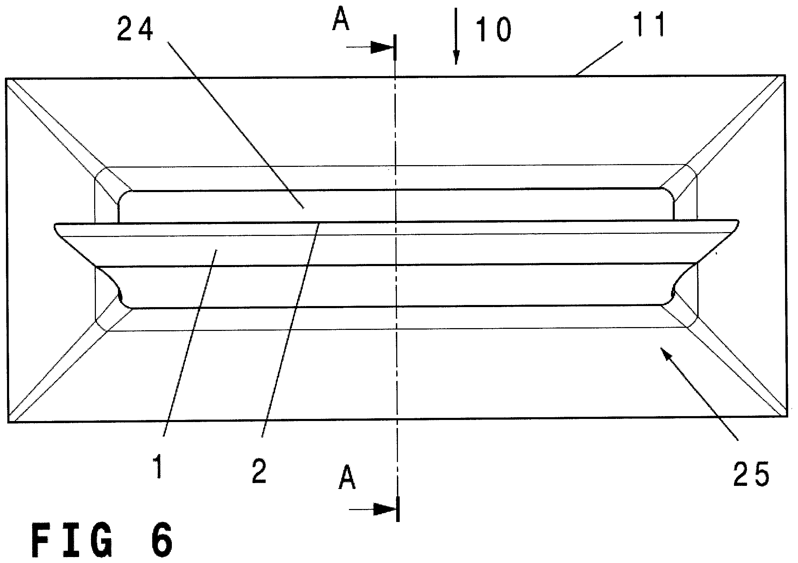

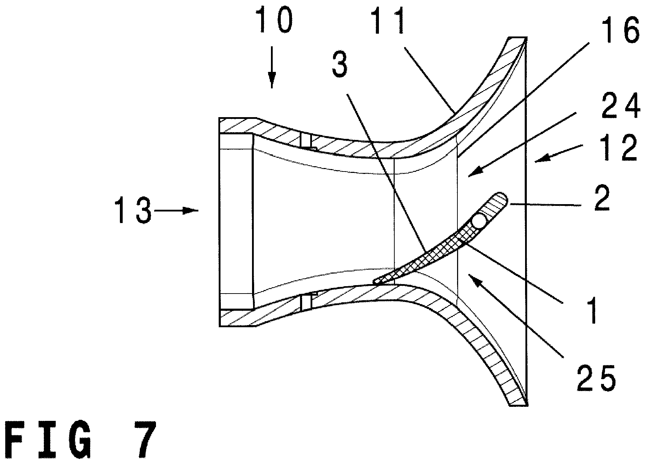

In FIG 6 ist eine Frontansicht eines Luftausströmers 10 dargestellt, der dort mit A-A verlaufende Schnitt durch den Luftausströmer 10 ist in FIG 7 dargestellt.

Der Luftausströmer gemäß FIG 6 und 7 weist ein Gehäuse 11, einen hinteren Anschluss 13 und eine Luftaustrittsöffnung 12 auf. Es ist die Einschnürung 19 im Gehäuse 11 vorhanden. Außerdem ist, wie bei FIG 2, eine Lamelle 1 im Gehäuse 11 in der unteren maximalen Auslenkposition dargestellt. In dieser Position der Lamelle 1 wird der durch das Gehäuse 11 geführte Luftstrom von der Lamelle 1 nach oben abgelenkt. Die Luftaustrittsöffnung 12 weist in dieser Stellung der Lamelle 1 nur einen Ausströmbereich 24 auf, durch den der Luftstrom aus dem Luftausströmer 11 austritt. Der unterhalb der Lamelle 1 verbleibende Verschlussbereich 25 ist nahezu vollständig durch den Rückbereich 3 der Lamelle 1 abgedichtet.

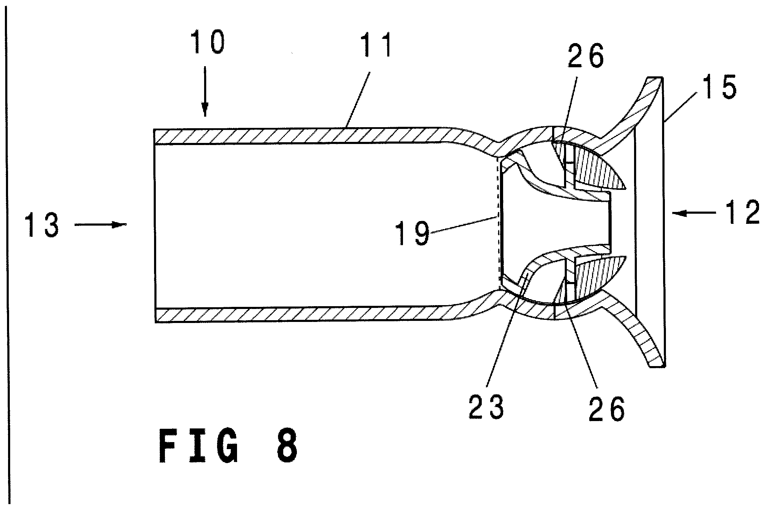

In FIG 8 ist ein Schnitt durch einen weiteren erfindungsgemäßen Luftausströmer 10 dargestellt. Zur Fassung und Beschleunigung des Luftstromes ist im Frontbereich des Luftausströmers 10 eine trichterförmige V-Lamelle im Doppeldeckerdesign 23 angeordnet, vor dem eine Lamelle, in FIG 8 nicht dargestellt, anordenbar ist. Die trichterförmige V-Lamelle im Doppeldeckerdesign 23 ist vorteilhaft zwischen der Luftaustrittsöffnung 12 und der Einschnürung 19 angeordnet, leicht in der Luftaustrittsöffnung 12 rückversetzt. Der Trichter 23 ist um eine horizontale Drehachse im Gehäuse 11 drehbar gelagert. Durch ein Verdrehen des Trichters 11 kann der Luftstrom in seiner Orientierung verändert werden. Damit die trichterförmige V-Lamelle im Doppeldeckerdesign 23 gut drehbar ist, ist die Innenwand 18 des Gehäuses 11 im Bereich des Trichters 23 mit einer Beschichtung 26 versehen.

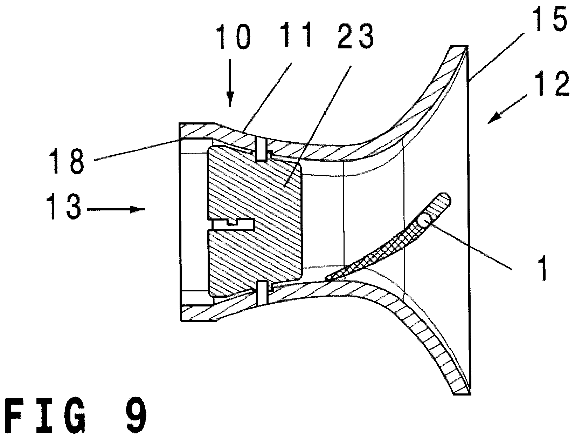

In FIG 9 ist die trichterförmige V-Lamelle im Doppeldeckerdesign 23 im Gehäuse 11 weiter nach hinten versetzt angeordnet. Die Lamelle 1 ist, wie bei FIG 2, im Gehäuse 11 angeordnet. Durch die trichterförmige V-Lamelle im Doppeldeckerdesign 23 wird der Luftstrom im Gehäuse 11 beschleunigt. Vor der Luftaustrittsöffnung 12 ist ein Gitter 15 angeordnet.
Durch den Einsatz der trichterförmigen V-Lamelle im Doppeldeckerdesign 23 gemäß FIG 9 legt sich die Strömung an den Innenwänden im Bereich der Luftaustrittsöffnung 12 des Gehäuses 11 an. So kann zusätzlich der Coanda-Effekt ausgenutzt werden.

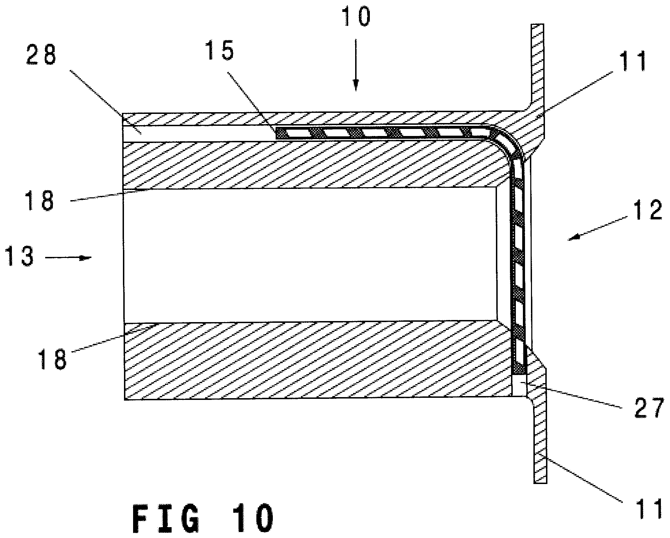

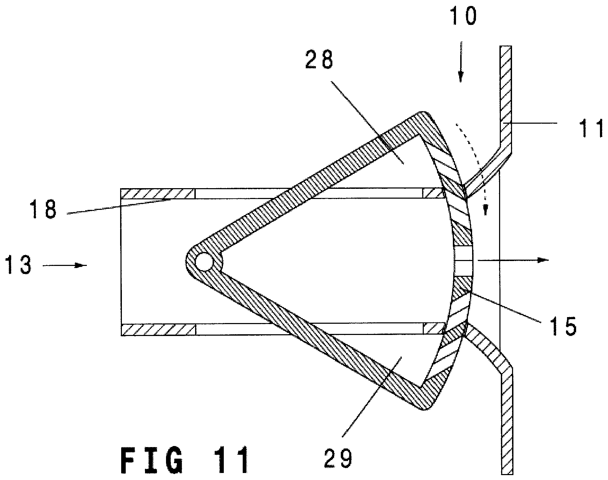

In FIG 10 und 11 sind besonders vorteilhafte Ausgestaltungen des Gitters 15 und dessen Anordnung im Luftausströmer 10 dargestellt.

In FIG 10 ist das Gitter 15 in Form eines Rollos ausgestaltet, das vor die Luftaustrittsöffnung 12 des Luftausströmers 10 geschoben werden kann. Das Gitter 15 besteht aus flexiblem Material oder aus miteinander gelenkartig verbundenen Segmenten. Im Gehäuse 11 ist ein Lagerbereich 28 vorhanden, in dem das Gitter 15 bei Nichtverwendung eingeschoben werden kann. Das Gitter 15 in Ausgestaltung als Rollo wird in eine Aufnahme 27 am Gehäuse 11 geschoben und ist dort befestigbar oder arretierbar.

In FIG 11 ist das Gitter 15 in Form eines Klappvisiers dargestellt, das aus einer oberhalb des Gehäuses angeordneten Position aus einem Lagerbereich 28 oberhalb der Luftaustrittsöffnung 12 in Richtung eines unterhalb der Luftaustrittsöffnung 12 angeordneten Lagerbereichs 29 im oder am Gehäuse 11 geschwenkt werden kann.

In einer vorteilhaften Ausgestaltung der Erfindung ist vorgesehen, das Gitter 15 in Ausgestaltung eines Rollos bzw. das Klappvisier in Form einer überlagerbaren Doppelmaske bzw. einer mehrlagigen Maske auszugestalten. Eine jede der Masken weist ein anderes Profil der Aussparungen auf, so dass bei Überlagerung der Masken der Luftstrom, der durch die Masken verläuft, veränderbar ist.

### Bezugszeichenliste

- 1: Lamelle
- 2: Frontbereich
- 3: Rückbereich
- 4: Übergangsbereich
- 5, 6: An-/Ausformungen

- 10: Luftausströmer
- 11: Gehäuse
- 12: Luftaustrittsöffnung
- 13: hinterer Anschluss
- 14-1, 14-2: Lamelle (integriert in zylinderförmige Walze)
- 15: Gitter
- 16: Stütze
- 17: Walze
- 18: Gehäuseinnenwand
- 19: Einschnürung
- 19-1, 19-2: Ausbuchtung
- 20: Ausnehmung
- 21: Steg(e)
- 23: trichterförmige V-Lamelle im Doppeldeckerdesign
- 24: Ausströmbereich
- 25: Verschlussbereich
- 26: Beschichtung
- 27: Aufnahme
- 28, 29: Lagerbereich

- x: Längsrichtung
- y: Querrichtung

## Patentansprüche

1. Lamelle (1) für einen Luftausströmer, insbesondere eine längsgestreckte Form aufweisend, bestehend aus einem nahezu die gesamte Längsrichtung (x) einnehmenden Frontbereich (2) und einem Rückbereich (3), wobei der Frontbereich (2) und der Rückbereich (3) aus in ihren mechanischen Eigenschaften unterschiedlichen Werkstoffen bestehen, wobei der Werkstoff des Frontbereichs (2) in Längsrichtung (x) eine relativ hohe Biegesteifigkeit aufweist, wohingegen der Rückbereich (3) eine gegenüber dem Frontbereich (2) erheblich geringere Biegesteifigkeit aufweist und der Rückbereich (3) in Querrichtung (y) länger als der Frontbereich (2) ausgebildet ist.

2. Lamelle (1) nach Patentanspruch 1, **dadurch gekennzeichnet, dass** der Rückbereich (3) der Lamelle (1) in Querrichtung (y) mindestens doppelt so lang ist wie der Frontbereich (2) und der Frontbereich (2) und der Rückbereich (3) der Lamelle (1) formschlüssig ineinander übergehen, dass der Übergang zwischen Frontbereich (2) und Rückbereich (3) der Lamelle (1) konturlos ist und dass die Lamelle (1) eine flache, wellige und/oder eckige Querschnittsstruktur aufweist.

3. Lamelle (1) nach Patentanspruch 1 oder 2, **dadurch gekennzeichnet, dass** der Frontbereich (2) und der Rückbereich (3) der Lamelle (1) aus thermoplatischem Kunststoff bestehen und der Frontbereich (2) ein Elastizitätsmodul von mindestens 12.000 MPa und der Rückbereich (3) ein Elastizitätsmodul von maximal 5.000 MPa aufweisen und dass die Lamelle (1) in einem Zwei-Komponenten-Spritzgussverfahren hergestellt ist und dass dem thermoplastischen Kunststoff des Frontbereichs (2) Fasern aus Kohlenstoff, Metall, Glasfasern oder Kunststoff mit aufgerauter Oberfläche oder Metallfadenabschnitte zugesetzt sind.

4. Lamelle (1) nach einem der vorangehenden Patentansprüche, **dadurch gekennzeichnet, dass** der Rückbereich (3) der Lamelle (1) aufgrund der geringeren Biegesteifigkeit ohne Bruch der Lamelle (1) in Querrichtung (y) verbiegbar ist und sich an angrenzende Berührungsflächen anschmiegt und mit Berührungsflächen eine Abdichtung vornimmt.

5. Luftausströmer (10) mit mindestens einer Lamelle (1) mit den Merkmalen eines der vorangehenden Patentansprüche, **dadurch gekennzeichnet, dass** der Luftausströmer (10) aus einem Gehäuse (11) besteht, das eine vordere Luftaustrittsöffnung (12) und einen hinteren Anschluss (13) an einen Luftzuführschacht zur Zuführung eines Luftstroms aufweist, dass die mindestens eine Lamelle (1) im vorderen Bereich des Gehäuses (11) an einer Stützeinheit (16) derart angeordnet ist, dass der Luftstrom mittels der mindestens einen Lamelle (1) ablenkbar ist, wobei die Lage der mindestens einen Lamelle (1) im Gehäuse (11) mittels der Stützeinheit (16) in horizontaler Richtung veränderbar ist und/oder die Lamelle an der Stützeinheit (16) um eine horizontal verlaufende Achse drehbar gelagert ist oder die mindestens eine Lamelle (1) feststehend im Gehäuse (11) an der Stützeinheit (16) angeordnet ist.

6. Luftausströmer (10) nach Patentanspruch 5, **dadurch gekennzeichnet, dass** die Stützeinheit eine Strebe (16) oder eine Walze (17) ist, die drehbar im Bereich der Luftaustrittsöffnung (12) des Gehäuses (11) gelagert angeordnet ist.

7. Luftausströmer (10) nach Patentanspruch 5 oder 6, **dadurch gekennzeichnet, dass** die Gehäuseinnenwand (18) des Gehäuses (11) im Bereich der Luftaustrittsöffnung (12) eine Cassinische Kurve (19-1, 19-2) in Form einer Lemniskate oder eine Kreisbogenform ausbildet, deren Radius in Richtung der Luftaustrittsöffnung (12) sich verkleinert und im Bereich der Berührungsfläche zwischen dem Rückbereich (3) der mindestens einen Lamelle (1) und der Gehäuseinnenwand (18) des Gehäuses (11) eine Einschnürung (19) bildet.

8. Luftausströmer (10) nach einem der Patentansprüche 5 bis 7, **dadurch gekennzeichnet, dass** vor oder in der Luftaustrittsöffnung (12), formschüssig diese verschließend, ein Gitter (15) anordenbar ist.

9. Luftausströmer (10) nach Patentanspruch 8, **dadurch gekennzeichnet, dass** das Gitter (15) durch horizontal und vertikal angeordnete Stege (21) und zwischen den Stegen (21) sich ausbildenden Ausnehmungen (20) gebildet ist, wobei die Ausnehmungen (20) in unterschiedlichen Richtungswinkeln eingebracht sind, wobei die Richtungswinkel der Ausnehmungen (20), die in einem horizontalen mittigen Bereich in der Luftaustrittsöffnung (12) angeordnet sind, senkrecht zu den Stegen (21) verlaufen und die Richtungswinkel der Ausnehmungen (20) oberhalb dieses Bereiches einen nach oben geneigten Winkel und die Ausnehmungen (20) unterhalb dieses Bereiches einen nach unten geneigten Winkel aufweisen und dieser Winkel vorzugsweise zwischen 30° und 45° liegt.

10. Luftausströmer (10) nach Patentanspruch 8 oder 9, **dadurch gekennzeichnet, dass** das Gitter (15) in Form eines Rollos, bestehend aus flexiblem Material, vor die Luftaustrittsöffnung (12) schiebbar oder in Form eines Visiers vor die Luftaustrittsöffnung (12) klappbar ist, wobei das Gitter (15) in das Gehäuse (11) einklappar oder einschiebbar ist.

11. Luftausströmer (10) nach einem der Patentansprüche 5 bis 10, **dadurch gekennzeichnet, dass** im Gehäuse (11) eine Anordnung zur Führung und/oder Ablenkung und/oder Unterbindung des zugeführten Luftstroms angeordnet ist, der aus einem Luftzufuhrschacht oder aus einer Luftzufuhrleitung in Heizungs-, Lüftungs- oder Klimaanlagen, insbesondere für Fahrgasträume in Kraftfahrzeugen, zuführbar ist, und dass das Gehäuse (11) in einen Wanddurchbruch einsetzbar oder hinter einem solchen montierbar ist und dass die Anordnung mindestens aus zwei separaten und um einen Winkel gegeneinander versetzt und/oder hintereinander angeordneten Elementen gebildet ist, so dass der zugeführte Luftstrom in seiner Strömungsrichtung einstellbar oder ablenkbar oder nahezu vollständig unterbindbar ist, wobei die Elemente mindestens jeweils eine Lamelle oder mindestens ein Lamellenblock sind, wobei ein Lamellenblock mehrere miteinander gekoppelte Lamellen aufweist und wobei eine jede der miteinander gekoppelten Lamellen eines Lamellenblocks im Lamellenblock derart gelagert ist, dass die Lamellen eines Lamellenblocks gemeinsam um eine Achse verschwenkbar sind.

12. Luftausströmer (10) nach einem der Patentansprüche 5 bis 11, **dadurch gekennzeichnet, dass** im Gehäuse (11) eine Einschnürung (19) eingebracht ist, wobei die Einschnürung (19) mittels eines Trichters gebildet ist.

## Claims

1. Slat (1) for an air vent, particularly having an elongate form, consisting of a front region (2) occupying almost the entire longitudinal direction (x) and a back region (3), wherein the front region (2) and the back region (3) consist of materials differing in their mechanical properties, wherein the material of the front region (2) has a relatively high bending stiffness in longitudinal direction (x), but the back region (3) has a bending stiffness substantially lower by comparison with the front region (2), and the back region (3) is formed to be longer in transverse direction (y) than the front region (2).

2. Slat (1) according to claim 1, **characterised in that** the back region (3) of the slat (1) is at least twice as long in transverse direction (y) as the front region (2) and the front region (2) and the back region (3) of the slat (1) merge in interlocking manner, that the transition between front region (2) and back region (3) of the slat (1) is without contouring and that the slat (1) has a flat, wavy and/or polygonal cross-sectional structure.

3. Slat (1) according to claim 1 or 2, **characterised in that** the front region (2) and the back region (3) of the slat (1) consist of thermoplastic plastics material, the front region (2) having a modulus of elasticity of at least 12,000 MPa and the back region (3) a modulus of elasticity of at most 5,000 MPa, that the slat (1) is produced in a two-component injection-moulding process and that fibres of carbon, metal, glassfibres or plastic with a roughened surface or metal thread sections are added to the thermoplastic plastics material of the front region (2).

4. Slat (1) according to any one of the preceding claims, **characterised in that** due to the lower bending stiffness the back region (3) of the slat (1) is bendable in transverse direction (y) without fracture of the slat (1) and nestles against adjoining contact surfaces and produces sealing with contact surfaces.

5. Air vent (10) with at least one slat (1) with the features of any one of the preceding claims, **characterised in that** the air vent (10) consists of a housing (11) having a front air outlet opening (12) and a rear connection (13) to an air feed shaft for the supply of an air flow, and that the at least one slat (1) is so arranged in the front region of the housing (11) at a support unit (16) that the air flow is deflectable by means of the at least one slat (1), wherein the position of the at least one slat (1) in the housing (11) is variable in horizontal direction by means of the support unit (16) and/or the slat is mounted at the support unit (16) to be rotatable about a horizontally extending axis or the at least one slat (1) is arranged in stationary position in the housing (11) at the support unit (16).

6. Air vent (10) according to claim 5, **characterised in that** the support unit is a strut (16) or a roller (17) arranged to be rotatably mounted in the region of the air outlet opening (12) of the housing (11).

7. Air vent (10) according to claim 5 or 6, **characterised in that** the housing inner wall (18) of the housing (11) in the region of the air outlet opening (12) forms a Cassinian curve (19-1, 19-2) in the shape of a lemniscate or an arc, the radius of which reduces in the direction of the air outlet opening (12) and forms a constriction (19) in the region of the contact surface between the back region (3) of the at least one slat (1) and the housing inner wall (18) of the housing (11).

8. Air vent (10) according to any one of claims 5 to 7, **characterised in that** a grille (15) can be arranged in front of or in the air outlet opening (12) to close this in interlocking manner.

9. Air vent (10) according to claim 8, **characterised in that** the grille (15) is formed by horizontally and vertically arranged webs (21) and cut-outs (20) formed between the webs (21), wherein the cut-outs (20) are formed at different directional angles, wherein the directional angles of the cut-outs (20) arranged in a horizontal central region in the air outlet opening (12) extend perpendicularly to the webs (21) and the directional angles of the cut-outs (20) above this region have an upwardly inclined angle and the cut-outs (20) below this region a downwardly inclined angle, this angle preferably being between 30° and 45°.

10. Air vent (10) according to claim 8 or 9, **characterised in that** the grille (15) in the form of a roller blind consisting of flexible material is pushable in front of the air outlet opening (12) or in the form of a visor is pivotable in front of the air outlet opening (12), the grille (15) being pivotable or pushable into the housing (11).

11. Air vent (10) according to any one of claims 5 to 10, **characterised in that** disposed in the housing (11) is an arrangement for guidance and/or deflection and/or suppressing the supplied air flow, which can be fed from an air feed shaft or from an air feed duct in heating, ventilating or air-conditioning installations, particularly for passenger compartments in motor vehicles, and that the housing (11) is insertable into a wall passage or mountable behind such and that the arrangement is formed from at least two separate elements, which are offset relative to one another by an angle and/or arranged one behind the other, so that the supplied air flow in its flow direction can be set, deflected or almost completely suppressed, wherein the elements are at least one respective slat or at least one slat block, wherein a slat block comprises a plurality of intercoupled slats and wherein each one of the intercoupled slats of a slat block is so mounted in the slat block that the slats of a slat block are pivotable in common about an axis.

12. Air vent (10) according to any one of claims 5 to 11, **characterised in that** a constriction (19) is formed in the housing (11), the construction (19) being formed by means of a funnel.

## Revendications

1. Lamelle (1) pour un diffuseur d'air, en particulier présentant une forme étirée en longueur, constituée d'une zone avant (2) occupant pratiquement toute la direction longitudinale (x) et d'une zone arrière (3), dans laquelle la zone avant (2) et la zone arrière (3) sont constituées de matériaux différents dans leurs propriétés mécaniques, dans laquelle le matériau de la zone avant (2) présente une rigidité en flexion relativement élevée dans la direction longitudinale (x), tandis que la zone arrière (3) présente une rigidité en flexion considérablement inférieure par rapport à la zone avant (2) et la zone arrière (3) est réalisée plus longue que la zone avant (2) dans la direction transversale (y).

2. Lamelle (1) selon la revendication 1, **caractérisée en ce que** la zone arrière (3) de la lamelle (1) est dans la direction transversale (y) au moins deux fois plus longue que la zone avant (2), et la zone avant (2) et la zone arrière (3) de la lamelle (1) s'imbriquent l'une dans l'autre par complémentarité de forme, que la transition d'imbrication entre la zone avant (2) et la zone arrière (3) de la lamelle (1) est sans relief, et que la lamelle (1) présente une structure de section transversale plate, ondulée et/ou anguleuse.

3. Lamelle (1) selon la revendication 1 ou 2, **caractérisée en ce que** la zone avant (2) et la zone arrière (3) de la lamelle (1) sont constituées d'une matière synthétique thermoplastique, et la zone avant (2) présente un module d'élasticité d'au moins 12 000 MPa et la zone arrière (3), un module d'élasticité de maximum 5000 MPa, et que la lamelle (1) est fabriquée dans un procédé de coulée par injection à deux composants, et que des fibres de carbone, du métal, des fibres de verre ou une matière synthétique avec une surface rugueuse ou des sections de fil métallique sont ajoutés à la matière synthétique thermoplastique de la zone avant (2).

4. Lamelle (1) selon l'une quelconque des revendications précédentes, **caractérisée en ce que** la zone arrière (3) de la lamelle (1) peut être cintrée dans la direction transversale (y) du fait de la faible rigidité en flexion sans rupture de la lamelle (1) et épouse des surfaces de contact contiguës et effectue une étanchéification avec des surfaces de contact.

5. Diffuseur d'air (10) pourvu d'au moins une lamelle (1) avec les caractéristiques d'une des revendications précédentes, **caractérisé en ce que** le diffuseur d'air (10) est constitué d'un boîtier (11), qui présente une ouverture de sortie d'air avant (12) et un raccord arrière (13) au niveau d'un puits d'amenée d'air servant à amener un flux d'air, que l'au moins une lamelle (1) est disposée dans la zone avant du boîtier (11) au niveau d'une unité d'appui (16) de telle manière que le flux d'air peut être dévié au moyen de l'au moins une lamelle (1), dans lequel la position de l'au moins une lamelle (1) dans le boîtier (11) peut être modifiée dans une direction horizontale au moyen de l'unité d'appui (16) et/ou la lamelle est montée au niveau de l'unité d'appui (16) de manière à pouvoir tourner autour d'un axe s'étendant de manière horizontale ou l'au moins une lamelle (1) est disposée de manière immobile dans le boîtier (11) au niveau de l'unité d'appui (16).

6. Diffuseur d'air (10) selon la revendication 5, **caractérisé en ce que** l'unité d'appui est une entretoise (16) ou un cylindre (17), qui est disposé en étant monté de manière à pouvoir tourner dans la zone de l'ouverture de sortie d'air (12) du boîtier (11).

7. Diffuseur d'air (10) selon la revendication 5 ou 6, **caractérisé en ce que** la paroi intérieure de boîtier (18) du boîtier (11) réalise dans la zone de l'ouverture de sortie d'air (12) un ovale de Cassini (19-1, 19-2) sous la forme d'une lemniscate ou d'une forme d'arc de cercle, dont le rayon se réduit en direction de l'ouverture de sortie d'air (12) et forme un étranglement (19) dans la zone de la surface de contact entre la zone arrière (3) de l'au moins une lamelle (1) et la paroi intérieure de boîtier (18) du boîtier (11).

8. Diffuseur d'air (10) selon l'une quelconque des revendications 5 à 7, **caractérisé en ce qu'**une grille (15) peut être disposée avant l'ouverture de sortie d'air (12) ou dans celle-ci en fermant celle-ci par complémentarité de forme.

9. Diffuseur d'air (10) selon la revendication 8, **caractérisé en ce que** la grille (15) est formée par des entretoises (21) disposées de manière horizontale et verticale et des évidements (20) réalisés entre les entretoises (21), dans lequel les évidements (20) sont pratiqués selon des angles directionnels différents, dans lequel les angles directionnels des évidements (20), qui sont disposés dans une zone centrale horizontale dans l'ouverture de sortie d'air (12), s'étendent de manière perpendiculaire par rapport aux entretoises (21) et les angles directionnels des évidements (20) présentent, au-dessus de ladite zone, un angle incliné vers le haut et les évidements (20) présentent, sous ladite zone, un angle incliné vers le bas, et cet angle est compris de préférence entre 30° et 45°.

10. Diffuseur d'air (10) selon la revendication 8 ou 9, **caractérisé en ce que** la grille (15) peut être glissée sous la forme d'un store, constitué d'un matériau flexible, devant l'ouverture de sortie d'air (12) ou peut être rabattue sous la forme d'une visière devant l'ouverture de sortie d'air (12), dans lequel la grille (15) peut être rentrée dans le boîtier (11) par rabattement ou par coulissement.

11. Diffuseur d'air (10) selon l'une quelconque des revendications 5 à 10, **caractérisé en ce qu'**est disposé dans le boîtier (11) un ensemble servant à guider et/ou à dévier et/ou à empêcher le flux d'air amené, qui peut être amené depuis un puits d'amenée d'air ou depuis un conduit d'amenée d'air dans des installations de chauffage, d'aération ou de climatisation, en particulier pour des habitacles dans des véhicules automobiles, et que le boîtier (11) peut être inséré dans une traversée de paroi ou peut être monté derrière une traversée de paroi de ce type, et que l'ensemble est formé à partir d'au moins deux éléments séparés et disposés de manière décalée les uns par rapport aux autres et/ou les uns derrière les autres selon un angle de sorte que le flux d'air amené peut être réglé dans sa direction d'écoulement ou peut être dévié ou quasiment totalement empêché, dans lequel les éléments sont au moins respectivement une lamelle ou au moins un bloc de lamelles, pour lequel un bloc de lamelles présente plusieurs lamelles couplées les unes aux autres et dans lequel chacune des lamelles couplées les unes aux autres d'un bloc de lamelles est montée dans le bloc de lamelles de telle manière que les lamelles d'un bloc de lamelles peuvent être pivotées conjointement autour d'un axe.

12. Diffuseur d'air (10) selon l'une quelconque des revendications 5 à 11, **caractérisé en ce qu'**un étranglement (19) est pratiqué dans le boîtier (11), dans lequel l'étranglement (19) est formé au moyen d'une trémie.
